# EUROPEAN PATENT SPECIFICATION

(11) **EP 0 403 302 B1**
(45) Date of publication and mention of the grant of the patent: **24.08.1994**
(21) Application number: 90306556.3
(22) Date of filing: 15.06.1990
(51) Int. Cl.: C09D 5/06

(54) **Improved oil-based paint**
Anstrichmittel auf Ölbasis
Peinture à base d'huile

(30) Priority: 15.06.1989 AU 4736/89; 23.10.1989 AU 6993/89
(43) Date of publication of application: 19.12.1990
(73) Proprietor: CHROMA ACRYLICS (NSW) LTD, Mt Kuringai, New South Wales 2080 (AU)
(72) Inventor: Cobb, James Campbell, Mt Kuringai, New South Wales 2080 (AU)
(74) Representative: Hepworth, John Malcolm

(56) References cited:
- GB-A- 1 479 725
- US-A- 1 448 869
- PATENT ABSTRACTS OF JAPAN, vol. 9, no. 237 (C-305)(1960) 24 September 1985; & JP-A-60 096 670
- PATENT ABSTRACTS OF JAPAN, vol. 13, no. 339 (C-624)(3687) 31 July 1989; & JP-A-1 118 579

## Description

### FIELD OF THE INVENTION

This invention relates to artist paints and more particularly to an improved linseed oil-based artist paint and a medium therefor.

### BACKGROUND TO THE INVENTION

Traditional artist paints are oil-based wherein the oil is generally linseed oil. Such paints have been in use for at least the past three centuries and continue to retain popularity. Oil-based paints are often used in conjunction with a medium which allows the artist to adjust the rheology of the paint and adjust the pigment/binder ratio.

It has long been recognised that whilst linseed oil-based artist paints have many desirable properties, in use they suffer from two defects.

The first defect is a tendency to yellow. This has been found to be controllable within acceptable limits by a careful formulation.

The second and most serious defect is that of an uncontrollable tendency to become brittle with age. It is understood that this embrittlement is caused by continued polymerisation or the linseed oil, a process which cannot be arrested at any desired stage of "cure". This defect is particularly acute in both large and thickly painted oil paintings.

In order to circumvent these defects, the prior art has provided acrylic artist paints. It is notable that acrylic paints have achieved considerable popularity and that these paints do not suffer from the two defects of linseed oil based artist paints. However, acrylic paint does not possess the "feel" of traditional oil-based artist paints. For that reason these paints are not generally used by "serious" artists.

Other attempts at meeting the embrittlement defect have been based on discovering formulations that were used by the various "old masters". None of these attempts, to the present inventor's knowledge, has proved satisfactory.

Two other problems encountered in the use of artists' oil paints are shrinkage and "creep". Ageing oil paint films shrink as they age, and at a time in their ageing cycle when they are already too brittle to accommodate such movement without cracking.

"Creep" results, for example, in very heavy impasto applications of paint which often shrink and move about while the underlayers are still wet, causing the surface to crinkle.

### SUMMARY OF THE INVENTION

The present inventor has recognised that there exists a need for a linseed oil or other oil based artist paint that will not only have the right "feel" but will not embrittle on ageing, or suffer from shrinkage or where applicable, "creep".

To meet the need to reduce embrittlement, the inventor proposes the introduction of an agent or agents into the paint that will act to plasticise the oil.

It follows that mediums for use with such a paint are also required and hence such mediums will also incorporate the requisite oil plasticiser.

Accordingly, a first aspect of the present invention provides an oil-based artist paint composition characterised in that the composition includes an oil selected from linseed oil, sunflower oil and safflower oil and an effective amount of a plasticiser for the oil, wherein the ratio of plasticiser to oil is no more than 20% plasticiser to 80% oil, provided, however, that the plasticiser is not monomeric.

In a second aspect, the present invention further provides a medium composition for use with an oil-based artist paint, the oil being selected from linseed oil, sunflower oil and safflower oil, characterised in that the composition includes a solvent; at least one alkyd resin which is thixotropic and is present in an amount effective to aid through drying of the oil in the paint; and a compound effective to plasticise the paint in an amount such that when the medium is used with the paint, the weight ratio of the plasticiser compound to oil will be no more than 20% plasticiser to 80% oil, provided, however, that the plasticiser is not monomeric.

It will be recognized by those skilled in the art that the mediums of the invention may also be used with a traditional linseed oil-based artist paint, to impart the beneficial properties of the invention thereto.

Although the present invention is useful for oil-based paints in which the oil is selected from sunflower, safflower and linseed oils. Particularly preferred is linseed oil where the colour of the paint composition will not be adversely affected by the yellowing or darkening of the linseed oil with time. In those paint compositions that are light in colour, sunflower oil or safflowor oil are preferred.

The present inventor believes that a selection of plasticiser and inclusion at an appropriate level in the paint and/or medium will produce paintings, the paint film of which when aged will contain sufficient soft polymer to ensure that film integrity and a degree of pliability are maintained.

Many soft polymers are potentially satisfactory for use in the inventive compositions however, in selecting suitable polymers, it will be recognised that the polymer must have the following properties:
1) A great degree of flexibility which remains unaltered by aging indoors. It is noted that the greater the flexibility, the smaller the addition required.
2) Non-yellowing.
3) Compatible with raw linseed oil and solvents that are mixed with linseed oil.
4) Unaffected by any of the constituents of the linseed oil per se (acid free).

### DESCRIPTION OF THE INVENTION

In the paint composition of the present invention, two polymers that have been found to perform satisfactorily as plasticisers are butyl polyacrylate and polyvinyl chloride isobutylether resin. These are available from BASF under the trade names Acronal 4F and Laroflex MP25, respectively. Acronal 4F is most preferred since the Laroflex is somewhat viscous. Additionally, it is a soft resin (copolymer) rather than a plasticiser per se so that substantial amounts are need to achieve the effect of the Acronal.

Other polymeric plasticisers that are operable are, for example, epoxidized oils such as Paraplex G62, available from Rohm & Haas.

The common monomeric plasticisers are not recommended as over a time frame of say ten years, volatilisation would lead to their loss, thereby resulting in embrittlement and shrinkage of the oil paint film.

It would appear that a ratio of up to 20% polymer to 80% oil, particularly linseed oil, is possible without noticeably altering the "feel" of the paint. It is to be expected that the desired improvement in film characteristics should be achieved with polymer ratios of 7-20%.

To meet the shrinkage and "creep" problems a non-yellowing thermoplastic resin may be included in the inventive paint composition, preferably with at least one alkyd resin. Desirably, the at least one alkyd resin will be thixotropic and will act to aid in the through drying of the oil and maintain "balance" in handling properties. A second alkyd resin may be advantageously included to aid in the through drying of the oil.

One non-yellowing thermoplastic resin that has been found suitable is Laropal A81, which is available from BASF. Two alkyd resins that have been found suitable are Jordathix and Jordasol, both of which are available from Ashland Chemicals. These are long oil alkyd resins.

Without wishing to be bound by theory, the present inventor believes that the presence of an alkyd resin triggers the drying process with the oils used. By selection and combination of two alkyd resins and by appropriately formulating the other components of a paint composition of the invention, the characteristics of the paint will be such that its handling properties will appear entirely conventional. Additionally, the slower drying sunflower or safflower oils can be made to dry at much the same speed as linseed oil.

In order to more fully appreciate the nature of the invention, several examples of typical paint compositions of the invention are set out below.

The examples show the formulation of a number of different pigment types:
- titanium white
- burnt umber
- red oxide
- pthalo blue
Burnt umber is an inherently thixotropic pigment with a high oil demand.

Red oxide is a characteristically strong inorganic pigment requiring an intermediate level of extender.

Pthalo blue is an organic pigment with a requirement for a high level of extender.

In addition, two extenders are exemplified, kaolin with a high oil demand and calcite with a low oil demand.

### EXAMPLE 1

| Titanium White | |
|---|---|
| Ingredient | Parts by weight |
| Pigment | 300 |
| Laropal (50%) | 200 |
| Jordathix (40%) | 130 |
| Jordasol (70%) | 100 |
| Sunflower oil | 160 |
| Swelling clay | 80 |
| Calcite | 460 |
| Acronal 4F | 80 |

### EXAMPLE 2

| Red Oxide | |
|---|---|
| Ingredient | Parts by weight |
| Pigment | 200 |
| Laropal (50%) | 270 |
| Linseed oil | 220 |
| Jordathix (40%) | 120 |
| Jordasol (70%) | 50 |
| Acronal 4F | 80 |
| Kaolin | 250 |
| Swelling clay | 100 |

### EXAMPLE 3

| Burnt Umber | |
|---|---|
| Ingredient | Parts by weight |
| Pigment | 375 |
| Laropal (50%) | 250 |
| Jordathix (40%) | 120 |
| Jordasol (70%) | 50 |
| Acronal 4F | 80 |
| Linseed oil | 250 |
| Swelling clay | 70 |
| Calcite | 250 |

### EXAMPLE 4

| Beta Pthalo Blue | |
|---|---|
| Ingredient | Parts by weight |
| Pigment | 60 |
| Laropal (50%) | 281 |
| Jordathix (40%) | 100 |
| Jordasol (70%) | 50 |
| Linseed oil | 200 |
| Swelling clay | 85 |
| Acronal 4F | 80 |
| Kaolin clay | 300 |

To each of these compositions may be added other ingredients well known in the act such as dispersants and viscosity modifiers. Further ingredients well known in the art such as drying agents, will be included in the paint compositions at a level appropriate to the compositions.

To prepare Examples 1-3, the swelling clay is dispersed in the Laropal, Jordathix and Jordasol. The requisite pigment and oil is then added followed by the Acronal 4F and the calcite or kaoline. Drying agents and other minor ingredients are then mixed into the composition as appropriate.

To prepare Example 4, a premix of the pigment is made with the Laropal. The premix is added to the remaining ingredients after they have been suitably mixed. Drying agents and other minor ingredients may be mixed into the composition as appropriate.

It should be noted that the ratio of the liquid components of these examples may be considerably varied. For example, to achieve a satisfactory rheology, the thixotropic Jordathix and low viscosity Laropal solutions, at high concentration, are "balanced out". The Acronal and Jordasol which both have high viscosity need to be compensated for by the Laropal and Jordathix.

In the medium composition of the present invention, polymers that have been found to be satisfactory are polyvinyl chloride isobutyl other copolymer (Laroflex MP25), butyl polyacrylate (Acronal 4F) and expoxidised oil (available from Rohm and Haas under the trade name Paraplex G62).

It is noted that prior art mediums are commonly oleo resinous blends in a solvent, having 20-40% solids, according to the artist's preference. The proportion of oil to resin determines the oiliness of the "feel", the higher the proportion of oil, the oiler, less tacky is the "feel".

In a medium composition of the present invention the plasticising polymer may be used in place of part or all of the resinous component in an oleo resinous blend. It is noted that Laroflex MP25 may be used without an oil component.

By way of example, a typical medium composition comprises polyvinyl chloride isobutyl ether copolymer in a solvent, having approximately 30% solids. The formulation is prepared by methods well known in the art.

The medium composition of the present invention is suitable for use with oil-based paints.

Alkyd resins are used where paint is to be applied thickly. Without the addition of alkyd resins, where paint is applied thickly the paint film will dry on the surface while remaining soft underneath. Movement of the soft underlayer may cause wrinkling of the surface. Inclusion of an alkyd resin allows the paint to set after application.

In order to better understand the nature of the medium composition of the invention, set out below are three examples.

### EXAMPLE 1 "FAT GEL"

| Ingredient | Parts by weight | Resin Solids |
|---|---|---|
| Jordasol | 400 | 280 |
| Jordathix | 200 | 80 |
| Turpentine | 100 | |
| Acronal 4F (10% solids) | 36 | |

This is a syrupy medium for glazing at 51% solids.

### EXAMPLE 2 "HEAVY GEL"

| Ingredient | Parts by weight | Resin Solids |
|---|---|---|
| Jordasol | 600 | 420 |
| Jordathix | 200 | 80 |
| Laropal (50%) | 400 | 200 |
| Swelling clay | 160 | |
| Acronal 4F | 80 | 80 |
| and drying agents | | |

This composition has a paste consistency suitable for impasto techniques and a solids content of 60.9%.

### EXAMPLE 3 "LEAN LIQUID GEL"

| Ingredient | Parts by weight |
|---|---|
| Jordathix | 300 |
| Jordasol | 300 |
| Turpentine | 450 |
| Acronal 4F 10% | 33 |
| and drying agents | |

This is a main medium used to dilute paint and has a solids content or 33%.

Although the invention has been described with reference to certain preferred embodiments and examples, the person skilled in the art will appreciate that numerous variations and modifications may be made to the invention.

## Claims

1. An oil-based artist paint composition characterised in that the composition includes an oil selected from linseed oil, sunflower oil and safflower oil and an effective amount of a plasticiser for the oil, wherein the ratio of plasticiser to oil is no more than 20% plasticiser to 80% oil, provided, however, that the plasticiser is not monomeric.

2. A paint composition as in claim 1 wherein the oil is linseed oil.

3. A paint composition as in claim 2 wherein the plasticiser is selected from the group consisting of acrylate polymers, soft resin copolymers and epoxidized oils.

4. A paint composition as in claim 3, wherein the plasticiser ratio is from 7 to 20%.

5. A paint composition as in claim 4, wherein the plasticiser is butyl polyacrylate or polyvinylchlorideisobutylether.

6. A paint composition as in claim 5, which includes a non-yellowing thermoplastic resin.

7. A paint composition as in claim 6, which includes at least one alkyd resin.

8. A paint composition as in claim 7, wherein the at least one alkyd resin is thixotropic and functions to aid through drying of the oil.

9. A paint composition as in claim 8, which includes a second alkyd resin which functions to aid through drying of the oil.

10. A paint composition as in claim 10, wherein the plasticiser is butyl polyacrylate.

11. A medium composition for use with an oil-based artist paint, the oil being selected from linseed oil, sunflower oil and safflower oil, characterised in that the composition includes a solvent; at least one alkyd resin which is thixotropic and is present in a amount effective to aid through drying of the oil in the paint; and a compound effective to plasticise the paint in an amount such that when the medium is used with the paint, the weight ratio of the plasticiser compound to oil will be no more than 20% plasticiser to 80% oil, provided, however, that the plasticiser is not monomeric.

12. A medium composition as in claim 11, wherein the plasticiser is an epoxidised oil or an acrylate polymer.

13. A medium composition as in claim 11 or claim 12, which includes a second alkyd resin which functions to aid through drying of the oil.

14. A medium composition as in claim 13, wherein the plasticiser is butyl polyacrylate.

15. A medium composition as in claim 14, which includes a non-yellowing thermoplastic resin.

## Patentansprüche

1. Eine Farbzusammensetzung auf Ölbasis für Künstler,**dadurch gekennzeichnet,** daß die Zusammensetzung ein Öl, das aus Leinsamenöl, Sonnenblumenöl und Safloröl ausgewählt ist, und eine wirksame Menge eines Weichmachers für das Öl enthält, wobei das Verhältnis von Weichmacher zu Öl nicht größer als 20% Weichmacher zu 80% Öl ist,jedoch unter der Voraussetzung, daß der Weichmacher nicht monomer ist.

2. Eine Farbzusammensetzung nach Anspruch 1, in der das Öl Leinsamenöl ist.

3. Eine Farbzusammensetzung nach Anspruch 2, in der der Weichmacher ausgewählt ist aus der Gruppe, die aus Acrylatpolymeren, Weichharzcopolymeren und epoxidierten Ölen besteht.

4. Eine Farbzusammensetzung nach Anspruch 3, in der der Anteil an Weichmacher 7-20% beträgt.

5. Eine Farbzusammensetzung nach Anspruch 4, in der der Weichmacher Butylpolyacrylat oder Polyvinylchloridisobutyläther ist.

6. Eine Farbzusammensetzung nach Anspruch 5, die ein nicht vergilbendes thermoplastisches Harz enthält.

7. Eine Farbzusammensetzung nach Anspruch 6, die wenigstens ein Alkydharz enthält.

8. Eine Farbzusammensetzung nach Anspruch 7, in der das wenigstens eine Alkydharz thixotrop ist und als Hilfe während des Trocknens des Öles wirkt.

9. Eine Farbzusammensetzung nach Anspruch 8, die ein zweites Alkydharz enthält, das als Hilfe während des Trocknens des Öles wirkt.

10. Eine Farbzusammensetzung nach Anspruch 10 , in der der Weichmacher Butylpolyacrylat ist.

11. Eine Mittelzusammensetzung zur Benutzung mit einer Farbe auf Ölbasis für Künstler, wobei das Öl aus Leinsamenöl, Sonnenblumenöl und Safloröl ausgewählt ist, **dadurch gekennzeichnet,** daß die Zusammensetzung enthält ein Lösungsmittel, wenigstens ein Alkydharz, das thixotrop und in einer Menge vorhanden ist, die wirksam ist als Hilfe während des Trocknens des Öles in der Farbe, und eine Mischung, die wirksam ist zum Weichmachen der Farbe, in einer Menge, daß bei Benutzung des Mittels mit der Farbe das Gewichtsverhältnis von Weichmachermischung zu Öl nicht größer als 20% Weichmacher zu 80% Öl sein wird, jedoch unter der Voraussetzung, daß der Weichmacher nicht monomer ist.

12. Eine Mittelzusammensetzung nach Anspruch 11, in der der Weichmacher ein epoxidiertes Öl oder ein Acrylatpolymer ist.

13. Eine Mittelzusammensetzung nach Anspruch 11 oder 12, die ein zweites Alkydharz enthält, das als Hilfe während des Trocknens des Öles wirkt.

14. Eine Mittelzusammensetzung nach Anspruch 13, in der der Weichmacher Butylpolyacrylat ist.

15. Eine Mittelzusammensetzung nach Anspruch 14, die ein nicht vergilbendes thermoplastisches Harz enthält.

## Revendications

1. Composition de peinture pour artiste à base d'huile, caractérisée en ce que la composition inclut une huile de graine de lin, de l'huile de tournesol et l'huile de carthame et une quantité efficace d'un plastifiant pour l'huile, dans laquelle le rapport de plastifiant à l'huile n'est pas supérieur à 20% de plastifiant à 80% d'huile, à condition, cependant, que le plastifiant ne soit pas monomérique.

2. Composition de peinture selon la revendication 1, dans laquelle l'huile est l'huile de graine de lin.

3. Composition de peinture selon la revendication 2, dans laquelle le plastifiant est choisi dans le groupe consistant des polymères acrylates, des copolymères de résine douce et des huiles époxydées.

4. Composition de peinture selon la revendication 3, dans laquelle le rapport de plastifiant est de 7 à 20%.

5. Composition de peinture selon la revendication 4, dans laquelle le plastifiant est le polyacrylate de butyle ou le polyvinylchlorure isobutyléther.

6. Composition de peinture selon la revendication 5, qui inclut une résine thermoplastique non jaunissante.

7. Composition de peinture selon la revendication 6, qui inclut au moins une résine alkyde.

8. Composition de peinture selon la revendication 7, dans laquelle ladite au moins une résine alkyde est thixotrope et fonctionne pour aider par séchage de l'huile.

9. Composition de peinture selon la revendication 8, qui inclut une seconde résine alkyde qui fonctionne pour aider par séchage de l'huile.

10. Composition de peinture selon la revendication 9, dans laquelle le plastifiant est du polyacrylate de butyle.

11. Composition de milieu pour utilisation avec une peinture pour artiste à base d'huile, l'huile étant choisie parmi l'huile de graine de lin, l'huile de tournesol et l'huile de carthame, caractérisée en ce que la composition inclut un solvant ; au moins une résine alkyde qui est thixotrope et présente en une quantité efficace pour aider par séchage de l'huile dans la peinture ; et un compose efficace pour plastifier la peinture en une quantité telle que lorsque le milieu est utilisé avec la peinture, le rapport en poids du composé plastifiant à l'huile ne sera pas supérieur à 20% de plastifiant à 80% d'huile, à condition, cependant, que le plastifiant ne soit pas monomérique.

12. Composition de milieu selon la revendication 11, dans laquelle le plastifiant est une huile époxydée ou un polymère acrylate.

13. Composition de milieu selon la revendication 11 ou 12, qui inclut une seconde résine alkyde qui fonctionne pour aider par séchage de l'huile.

14. Composition de milieu selon la revendication 13, dans laquelle le plastifiant est un polyacrylate de butyle.

15. Composition de milieu selon la revendication 14, qui inclut une résine thermoplastique non jaunissante.
